# EUROPÄISCHE PATENTANMELDUNG

(11) **EP 1 586 434 A1**
(43) Veröffentlichungstag der Anmeldung: **19.10.2005**
(21) Anmeldenummer: 05004190.4
(22) Anmeldetag: 25.02.2005
(51) Int. Cl.: B29C 45/66

(54) **Formschliesseinheit**

(30) Priorität: 15.04.2004 DE 102004018238
(71) Anmelder: Demag Ergotech GmbH, 90571 Schwaig (DE)
(72) Erfinder: Wessely, Ralph, 90559 Burgthann (DE)
(74) Vertreter: Maierl, Christine

(57) **Zusammenfassung**

Bei einer Formschließeinheit, insbesondere für eine Spritzgießmaschine, mit einer feststehenden und einer linear beweglichen Formaufspannplatte (2, 6) sowie mit einem von einem Rotationsmotor (7) angetriebenen Kniehebelmechanismus (8) für die Verfahrbewegung und die Verriegelung der beweglichen Formaufspannplatte in der Formschließlage wird erfindungsgemäß die Anzahl der erforderlichen Gestängeteile ohne Beeinträchtigung der kinematischen Variationsbreite dadurch verringert, dass der Kniehebelmechanismus mit dem Rotor (14) des Rotationsmotors über zumindest eine innerhalb der Grenzen des Rotordurchmessers exzentrisch zur Rotordrehachse unmittelbar am Rotor angelenkte Pleuelstange (15) antriebsschlüssig verkoppelt ist.

## Beschreibung

Die Erfindung bezieht sich auf eine Formschließeinheit, insbesondere für eine Spritzgießmaschine, nach dem Oberbegriff des Patentanspruchs 1 bzw. des Patentanspruchs 14.

Ausgangspunkt der Erfindung ist eine Formschließeinheit der aus der DE 199 23 849 C2 bekannten Art, bei der die Verfahrbewegung und die Verriegelung der beweglichen Formaufspannplatte durch einen 5-Punkt-Kniehebelmechanismus bewirkt wird, welcher seinerseits durch einen Rotationsmotor und einen nachgeschalteten Kurbeltrieb, bestehend aus einer an der Motorwelle befestigten Kurbel und einer am freien Kurbelende angelenkten Pleuelstange, zwischen einer Strecklage, in der sich die Formaufspannplatten in der Schließ- und Verriegelungsposition befinden, und einer der Formöffnungsposition entsprechenden Einschwenklage umgesteuert wird. Ein solcher kombinierter Kurbel- und Kniehebelmechanismus bietet zwar hinsichtlich des Hubkraft- und -geschwindigkeitsverlaufs der beweglichen Formaufspannplatte eine große Variationsbreite, erfordert jedoch eine Vielzahl von Antriebs- und Gestängeteilen und ist dementsprechend bauaufwändig.

Aufgabe der Erfindung ist es, eine Formschließeinheit der eingangs genannten Art so auszubilden, dass die Anzahl der erforderlichen Antriebs- und Gestängeteile ohne Beeinträchtigung der kinematischen Variationsbreite verringert wird.

Diese Aufgabe wird erfindungsgemäß durch die im Patentanspruch 1 bzw. 14 gekennzeichnete Formschließeinheit gelöst.

Während der Hub eines Kurbeltriebs durch die Exzentrizität des Kurbelgelenks von der Drehachse festgelegt wird und daher nach dem Stand der Technik zur Erzielung großer Hubwege entsprechend lange Kurbelarme benötigt werden, beruht die Erfindung auf der Überlegung, dass bei einem kombinierten Kurbel-und Kniehebelmechanismus unabhängig von der Kurbellänge und allein durch eine Abstandsänderung des antriebsseitigen Kniehebelgelenkpunktes die kinematische Variationsbreite bereits vollkommen ausreicht, um selbst mit einer geringen Exzentrizität des Kurbelgelenks eine erwünscht große Verfahrbewegung der beweglichen Formaufspannplatte zu erzielen, was erfindungsgemäß dazu ausgenutzt wird, das pleuelstangenseitige Exzentergelenk innerhalb der Grenzen des Rotordurchmessers, und zwar am Rotor des Rotationsmotors selbst, anzuordnen und die daraus resultierende Verkürzung des Pleuelstangenhubs durch ein entsprechend höheres Hubverstärkungsverhältnis des nachgeschalteten Kniehebelmechanismus auszugleichen, so dass auf eine eigene Exzenterkurbel oder -scheibe oder gar ein aufwändiges Zwischengetriebe antriebsseitig der Pleuelstange verzichtet wird und sich dennoch die Hubkinematik der beweglichen Formaufspannplatte über einen unverändert weiten Bereich frei wählen lässt.

Nach Anspruch 2 wird als Rotationsmotor zur Erzeugung hoher Antriebsmomente bei zugleich einfacher Motorsteuerung ein elektrischer Hohlwellenmotor mit einem am Hohlwellenende angeordneten Exzentergelenk für die Pleuelstange bevorzugt, und ein besonders günstiger Kraftverlauf mit hohen Verriegelungskräften in der Schließlage der beweglichen Formaufspannplatte wird nach den Ansprüchen 3 und 4 zweckmäßigerweise dadurch erreicht, dass sich der Kniehebelmechanismus und/oder die Pleuelstange im Verriegelungszustand der Formaufspannplatten in oder nahe der Strecklage befinden.

Nach Anspruch 5 ist der Rotationsmotor zum Öffnen und Schließen der beweglichen Formaufspannplatte vorzugsweise voll durchdrehbar, so dass die Notwendigkeit eines drehrichtungsumkehrbaren Antriebs und einer entsprechend aufwändigen Motorsteuerung entfällt.

Das Hubverstärkungsverhältnis des Kniehebelmechanismus wird, wie nach Anspruch 6 bevorzugt, am einfachsten durch die Lage des mit der Pleuelstange verkoppelten, antriebsseitigen Gelenkpunktes an dem ortsfest angelenkten, ersten Kniehebel des Kniehebelmechanismus vorgegeben, wobei der Kniehebelmechanismus sowohl als 5-Punkt-Gelenksystem nach Anspruch 7 oder zur Erzielung großer Hubwege bei vergleichsweise kleinen Schwenkwinkeln nach Anspruch 8 als 7-Punkt- Gelenksystem ausgebildet sein kann.

Aus Gründen einer kippstabilen Kraftbeaufschlagung wird die Hubkraft des Kniehebelmechanismus vorzugsweise in Form eines oder mehrerer mittensymmetrischer Kräftepaare in die bewegliche Formaufspannplatte eingeleitet, derart, dass der Kniehebelmechanismus nach Anspruch 9 aus paarweise zur Symmetrieebene der beweglichen Formaufspannplatte in gleichen Abständen angeordneten, jeweils antriebsschlüssig mit der Pleuelstange verbundenen Kniehebelgestängen besteht. Zum Verschwenken der spiegelsymmetrisch identischen Einzelgestänge in zueinander entgegengesetzten Richtungen sind diese nach Anspruch 10 vorzugsweise über jeweils einen Steuerlenker mit einem zentralen Kreuzjoch verkoppelt, welches vom Rotationsmotor über eine oder - nach Anspruch 11 - mehrere Pleuelstangen in Hubrichtung der Formaufspannplatte beweglich angetrieben wird. Wahlweise ist es jedoch auch möglich, die Pleuelstangen unmittelbar mit den einzelnen Kniehebelgestängen zu verbinden und, wie nach Anspruch 12 bevorzugt, die gegensinnige Schwenkbewegung der Kniehebelgestänge dadurch zu erzeugen, dass die Pleuelstangen motorseitig mit in Umfangsrichtung zueinander versetzten Exzentergelenken des Rotors verkoppelt sind, wodurch die Rotationsbewegung des Rotors auf baulich besonders einfache und wirksame Weise in eine Kniehebelbewegung umgesetzt wird.

Nach Anspruch 13 schließlich ist der Rotationsmotor mit der Rotordrehachse vorzugsweise mittensymmetrisch und senkrecht zur Hubrichtung der beweglichen Formaufspannplatte angeordnet und gehäuseseitig an der den Kniehebelmechanismus endseitig abstützenden Basis befestigt, woraus sich eine besonders kompakte Bauweise des gesamten Antriebs- und Gestängesystems ergibt.

Gemäß einer besonderen Ausführungsform der Erfindung kann im Falle relativ kleiner zu erzielender Hubwege, wie sie bei der Herstellung von Kleinteilen oder flächigen Werkstücken, wie beispielsweise CD's oder DVD's auftreten können, ganz auf die Zwischenschaltung eines Kniehebelmechanismus zwischen Kurbeltrieb und beweglicher Formaufspannplatte verzichtet werden, ohne vom Gegenstand der Erfindung abzuweichen. Hier wird der Hub des Kurbeltriebs durch die Exzentrizität des Kurbelgelenks von der Drehachse festgelegt. Da in diesem Sonderfall die im Betrieb erwünschte hohe Taktfrequenz der Formschließeinheit vorteilhaft auch durch kurze Hubwege unterstützt werden kann, ist selbst mit einer geringen Exzentrizität des Kurbelgelenks die erwünschte Verfahrbewegung der beweglichen Formaufspannplatte zu erzielen. Dies wird erfindungsgemäß dazu ausgenutzt, das pleuelstangenseitige Exzentergelenk innerhalb der Grenzen des Rotordurchmessers, und zwar am Rotor des Rotationsmotors selbst anzuordnen, während die andere Seite der Pleuelstange an der beweglichen Formaufspannplatte angelenkt ist. So kann in diesem Sonderfall auf eine eigene Exzenterkurbel oder -scheibe oder gar ein aufwändiges Zwischengetriebe antriebsseitig der Pleuelstange sowie einen nachgeschalteten Kniehebelmechanismus verzichtet werden und dennoch die erwünschte Hubkinematik der beweglichen Formaufspannplatte erreicht werden. Hierdurch kann die Anzahl der erforderlichen Antriebs- und Gestängeteile ohne Beeinträchtigung der speziellen Funktionalität weiter verringert werden.

Die Ausführungsform der Formschließeinheit gemäß Anspruch 14 ist ansonsten analog zu der gemäß Anspruch 1.

Nach Anspruch 15 wird als Rotationsmotor zur Erzeugung hoher Antriebsmomente bei zugleich einfacher Motorsteuerung ein elektrischer Hohlwellenmotor mit einem am Hohlwellenende angeordneten Exzentergelenk für die Pleuelstange bevorzugt.

Nach Anspruch 16 ist der Rotationsmotor zum Öffnen und Schließen der beweglichen Formaufspannplatte voll durchdrehbar, wodurch auf einen drehrichtungsumkehrbaren Antrieb und eine entsprechend aufwändige Motorsteuerung verzichtet werden kann.

Nach Anspruch 17 schließlich ist der Rotationsmotor mit der Rotordrehachse vorzugsweise mittensymmetrisch und senkrecht zur Hubrichtung der beweglichen Formaufspannplatte angeordnet und gehäuseseitig an der den Schließmechanismus endseitig abstützenden Basis befestigt, woraus sich eine besonders kompakte Bauweise des gesamten Antriebs- und Gestängesystems ergibt.

Die Erfindung wird nunmehr beispielsweise in Verbindung mit den Zeichnungen näher erläutert. Es zeigen in stark schematisierter Darstellung:
- **Fig. 1**: die Seitenansicht einer Formschließeinheit nach der Erfindung in der Verriegelungslage;
- **Fig. 2**: die in Fig.1 dargestellte Formschließeinheit in der Öffnungslage;
- **Fig. 3**: die Formschließeinheit nach Fig. 1 in der - teilweise geschnittenen - Aufsicht; und
- **Fig. 4**: eine ausschnittsweise Seitenansicht einer weiteren Ausführungsform der Erfindung im Bereich des Antriebsmotors.

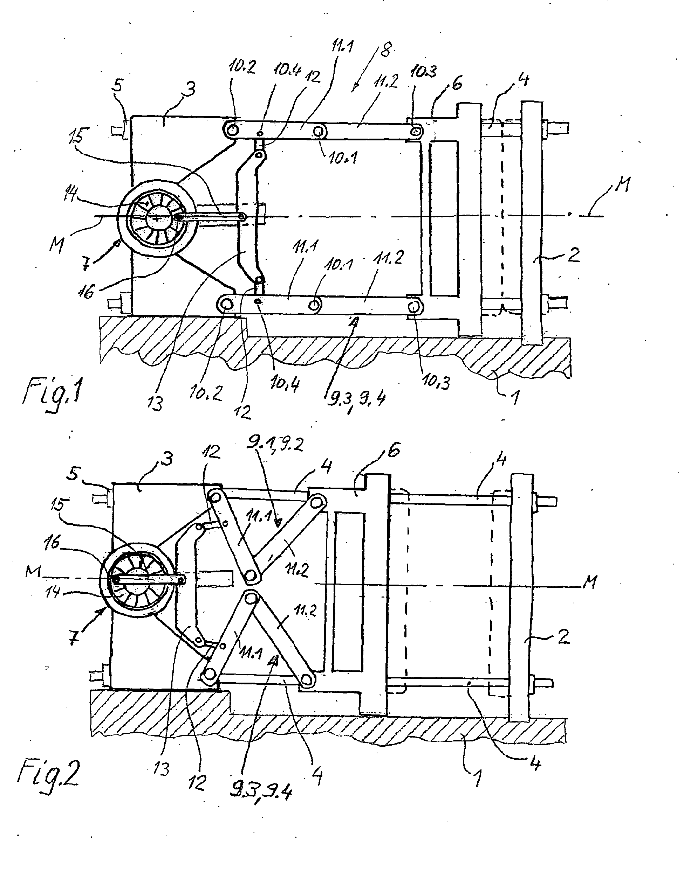

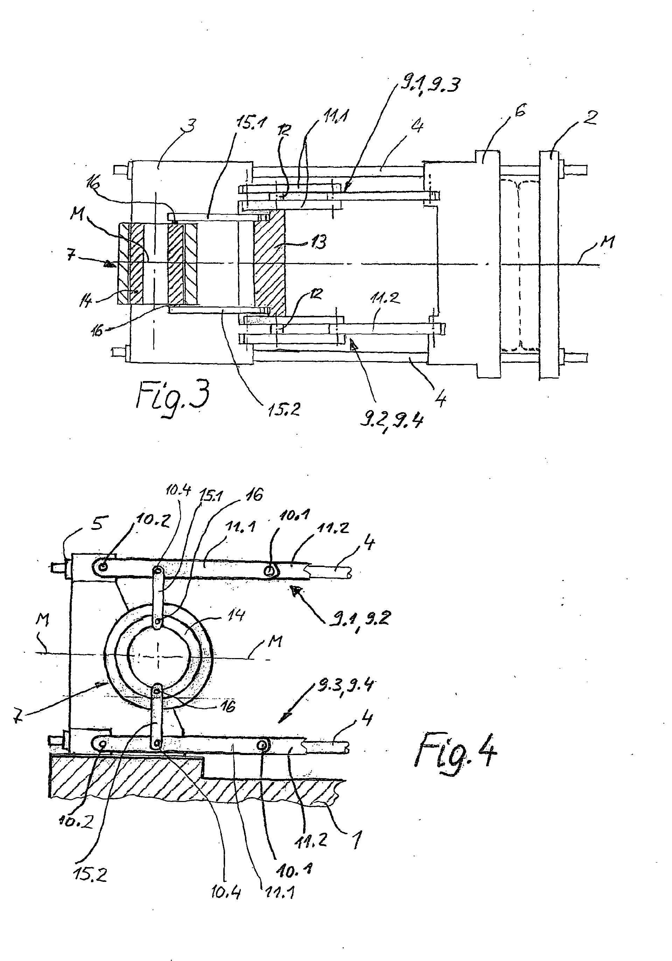

Die in den Fig. 1 bis 3 gezeigte Formschließeinheit enthält als Hauptbestandteile eine am Maschinenbett 1 befestigte Formaufspannplatte 2, eine Basis 3, die über Holme 4 mit der feststehenden Formaufspannplatte 2 zugfest und zum Zwecke der Formhöheneinstellung durch Verstellmuttern 5 abstandsveränderlich verbunden ist, eine bewegliche Formaufspannplatte 6, welche in Richtung der Maschinenachse M-M linear verfahrbar auf den Holmen 4 geführt ist, einen Drehantrieb 7 in Form eines elektrischen Hohlwellenmotors und einen von diesem angetriebenen Kniehebelmechanismus 8 für die Verfahrbewegung und Verriegelung der beweglichen Formaufspannplatte 6 in der in Fig. 1 gezeigten Schließlage.
Aus Gründen einer kippstabilen Kraftbeaufschlagung der beweglichen Formaufspannplatte 6 ist der Kniehebelmechanismus 8 aus vier identischen, parallel wirkenden Einzelgestängen 9.1....9.4 aufgebaut, die jeweils paarweise spiegelsymmetrisch zur Maschinenachse M-M zwischen der Basis 3 und der beweglichen Formaufspannplatte 6 angeordnet sind. Jedes dieser Kniehebelgestänge 9 besteht aus zwei über einen freien Gelenkpunkt 10.1 miteinander verbundenen Einzelhebeln 11.1 und 11.2, die endseitig einerseits über einen Gelenkpunkt 10.2 mit der Basis 3 und andrerseits über einen Gelenkpunkt 10.3 mit der beweglichen Formaufspannplatte 6 verkoppelt sind.

Antriebsseitig sind die Kniehebelgestänge 9.1....9.4 jeweils an einem Drehgelenk 10.4 des basisseitigen Kniehebels 11.1 über einen Zwischenlenker 12 mit einem an der Basis 3 geführten Kreuzjoch 13 gelenkig verbunden, welches seinerseits durch den Hohlwellenmotor 7 hubbeweglich angetrieben wird, wobei das Drehgelenk 10.4 zwischen den beiden Gelenkpunkten 10.1 und 10.2 des Kniehebels 11.1 dem geforderten Hubverstärkungsverhältnis entsprechend positioniert wird.

Der Hohlwellenmotor 7 ist mit der Drehachse des Rotors 14 senkrecht zur Maschinenachse M-M und zur Zeichenebene der Fig.1 und 2 ausgerichtet und gehäuseseitig an der Basis 3 befestigt. Die Umsetzung der Drehbewegung des Hohlwellenrotors 14 in eine Vor- und Rückhubbewegung des Kreuzjochs 13 erfolgt durch eine und bei dem gezeigten Ausführungsbeispiel zwei parallel wirkende Pleuelstangen 15.1, 15.2, die einerseits am Kreuzjoch 13 angelenkt und andrerseits unmittelbar mit dem Rotor 14 an einem am jeweiligen Rotorende befestigten Exzenterzapfen 16 gelenkig verbunden sind. Die daraus resultierende Hubwegbeschränkung des Kreuzjochs 13 auf die Grenzen des Rotordurchmessers wird durch eine entsprechende Hubverstärkung der Kniehebelgestänge 9 ausgeglichen, so dass sich trotz der Direktanlenkung der Pleuelstangen 15 am Hohlwellenrotor 14 ein über einen weiten Bereich beliebig vorgegebener Schließ- und Öffnungsweg der beweglichen Formaufspannplatte 6 realisieren lässt.

In der in Fig. 1 gezeigten, vorderen Totpunktlage der Pleuelstangen 15 sind die Kniehebelgestänge 9 über die Zwischenlenker 12 auswärts in die oder kurz über die Strecklage hinaus verschwenkt und das Antriebssystem zwischen Hohlwellenrotor 14 und Formaufspannplatte 6 besitzt einen sehr hohen Kraftverstärkungsgrad, so dass die - in den Fig. gestrichelt dargestellten - Formwerkzeugteile sicher in der Schließlage verriegelt werden. Bei einer Drehung des Hohlwellenrotors 14 in die in Fig. 2 gezeigte, hintere Totpunktlage der Pleuelstangen 15 werden die Kniehebelgestänge 9 über das Kreuzjoch 13 und die Zwischenlenker 12 einwärts verschwenkt und die Formaufspannplatte 6 demzufolge in die Öffnungslage zurückgefahren. Nach einer vollen Umdrehung des Rotors 14 gelangen die Pleuelstangen 15 erneut in die vordere Totpunktlage und die Formwerkzeugteile in die Verriegelungsstellung, so dass die Formschließeinheit einen vollständigen Schließ- und Öffnungszyklus durchläuft, ohne dass die Drehrichtung des Hohlwellenmotors 7 umgekehrt werden muss.

Die in Fig. 4 ausschnittsweise dargestellte Formschließeinheit ist von weitgehend gleicher Bau- und Funktionsweise wie das erste Ausführungsbeispiel, und einander entsprechende Komponenten sind durch das gleiche Bezugszeichen gekennzeichnet. Der Hauptunterschied besteht in einer weiteren baulichen Vereinfachung der Gelenkverbindung zwischen dem Hohlwellenrotor 14 und den Kniehebelgestängen 9.1...9.4 mit einem Direktanschluss der Pleuelstangen 15.1, 15.2 an den antriebsseitigen Gelenkpunkten 10.4 der basisseitigen Kniehebel 11.1, ohne dass es der Zwischenschaltung eines Kreuzjochs 13 und der Zwischenlenker 12 gemäß den Fig. 1 bis 3 bedarf. Auf Seiten des Drehantriebs 7 sind die Pleuelstangen 15 wiederum über die Exzenterzapfen 16 unmittelbar mit dem Hohlwellenrotor 14 gelenkig verbunden, wobei die Exzenterzapfen 16 in diesem Fall mit gleichen Abständen diametral zur Rotordrehachse an den Rotorenden positioniert sind, so dass sie bei einer Drehbewegung des Rotors 14 spiegelsymmetrisch zur Maschinenachse M-M aus- bzw. eingefahren werden und dadurch die Kniehebelgestänge 9.1, 9.2 und 9,3, 9.4 gegensinnig zueinander ein- oder auswärts schwenken. In der in Fig. 4 dargestellten, ausgefahrenen Totpunktlage der Pleuelstangen 15 befinden sich die Kniehebelgestänge 9 wiederum in oder kurz hinter der Strecklage und die - nicht gezeigten - Formwerkzeugteile im Verriegelungszustand. Im Übrigen ist die Bau- und Funktionsweise dieser Ausführungsform die gleiche wie beim ersten Ausführungsbeispiel, abgesehen davon, dass der Hohlwellenmotor 7 konform zu den Hubumkehrpunkten der beweglichen Formaufspannplatte drehrichtungsumkehrbar ist.

Die Kinematik und vor allem das Drehwinkel-/Hubverhältnis des kombinierten Pleuelstangen- und Kniehebelmechanismus lässt sich ohne Vergrößerung des Bauvolumens z. B. allein durch entsprechende Positionierung der Gelenkpunkte in weiten Grenzen beliebig gestalten. Von besonderem Vorteil ist dabei der gerade für Formschließeinheiten günstige Geschwindigkeits- und Kraftverlauf mit einer in Richtung der Öffnungslage zunehmenden Verfahrgeschwindigkeit und einer in Richtung der Schließlage ansteigenden Kraftverstärkung bis hin zu extrem hohen Schließ- und Aufreißkräften und einer sicheren, formschlüssigen Verriegelung in bzw. nahe der Totpunktlage der hintereinander geschalteten Pleuelstangen- und Kniehebeltriebe in Verbindung mit einer baulich einfachen Gestaltung der Formschließeinheit antriebsseitig des Kniehebelmechanismus.

## Patentansprüche

1. Formschließeinheit, insbesondere für eine Spritzgießmaschine, mit einer feststehenden und einer linear beweglichen Formaufspannplatte sowie mit einem von einem Rotationsmotor angetriebenen Kniehebelmechanismus für die Verfahrbewegung und die Verriegelung der beweglichen Formaufspannplatte in der Formschließlage, **dadurch gekennzeichnet, dass** der Kniehebelmechanismus (8) mit dem Rotor (14) des Rotationsmotors (7) über zumindest eine innerhalb der Grenzen des Rotordurchmessers exzentrisch zur Rotordrehachse unmittelbar am Rotor angelenkte Pleuelstange (15) antriebsschlüssig verkoppelt ist.

2. Formschließeinheit nach Anspruch 1, **dadurch gekennzeichnet, dass** der Rotationsmotor (7) ein elektrischer Hohlwellenmotor mit einem am Hohlwellenende angeordneten Drehgelenk (16) für die Pleuelstange (15) ist.

3. Formschließeinheit nach Anspruch 1 oder 2, **dadurch gekennzeichnet, dass** der Kniehebelmechanismus (8) durch die Pleuelstange (15) in die die Formaufspannplatte (6) verriegelnde Strecklage verschwenkbar ist.

4. Formschließeinheit nach einem der vorhergehenden Ansprüche, **dadurch gekennzeichnet, dass**
der Kniehebelmechanismus (8) im Totpunkt der Pleuelstange (15) in die Strecklage verschwenkt ist.

5. Formschließeinheit nach einem der vorhergehenden Ansprüche, **dadurch gekennzeichnet, dass**
der Rotationsmotor (7) zum Öffnen und Schließen der beweglichen Formaufspannplatte (6) voll durchdrehbar ist.

6. Formschließeinheit nach einem der vorhergehenden Ansprüche, **dadurch gekennzeichnet, dass**
der Kniehebelmechanismus (8) am einen Ende mit einer Basis (3) und am anderen Ende mit der beweglichen Formaufspannplatte (6) gelenkig verbunden ist und mindestens einen dazwischenliegenden, freien Gelenkpunkt (10.1) und einen antriebsschlüssig mit der Pleuelstange (15) verkoppelten, nach Maßgabe des Hubverstärkungsverhältnisses im Bereich zwischen dem basisfesten und dem freien Gelenkpunkt (10.1, 10.2) angeordneten Gelenkpunkt (10.4) aufweist.

7. Formschließeinheit nach einem der vorhergehenden Ansprüche, **dadurch gekennzeichnet, dass**
der Kniehebelmechanismus (8) als Doppelhebelmechanismus ausgebildet ist, dessen basisseitig erster Hebel (11.1) antriebsschlüssig mit der Pleuelstange (15) verkoppelt ist.

8. Formschließeinheit nach einem der Ansprüche 1 bis 6, **dadurch gekennzeichnet, dass**
der Kniehebelmechanismus (8) als Dreihebelmechanismus mit einem basisseitigen, ersten, einem aufspannplattenseitigen, zweiten und einem diese gelenkig miteinander verbindenden, dritten Hebel in Form eines an einer linear beweglichen Zwischenplatte angelenkten Doppelhebels ausgebildet ist.

9. Formschließeinheit nach einem der vorhergehenden Ansprüche, **dadurch gekennzeichnet, dass**
der Kniehebelmechanismus (8) aus paarweise in gleichen Abständen zu einer in Hubrichtung der beweglichen Formaufspannplatte (6) liegenden Symmetrieebene angeordneten, jeweils antriebsschlüssig mit der Pleuelstange (15) verbundenen Kniehebelgestängen (9.1,,,9.4) besteht.

10. Formschließeinheit nach einem der vorhergehenden Ansprüche, **gekennzeichnet durch**
ein von der zumindest einen Pleuelstange (15) linear hubbeweglich angetriebenes Kreuzjoch (13) mit endseitigen, beidseitig der Symmetrieebene des Kreuzjoches angeordnete Kniehebelgestänge (9.1, 9.3 und 9.2, 9.4) in zueinander entgegengesetzter Schwenkrichtung antreibenden Steuerlenkern (12).

11. Formschließeinheit nach einem der vorhergehenden Ansprüche, **gekennzeichnet durch**
zwei, jeweils an einem Rotorende angelenkte Pleuelstangen (15:1, 15.2) zum Antrieb von beidseitig einer in Hubrichtung der beweglichen Formaufspannplatte (6) liegenden Symmetrieebene angeordneten Kniehebelgestängen (9.1, 9.3 bzw. 9.2, 9.4) in jeweils entgegengesetzter Schwenkrichtung.

12. Formschließeinheit nach Anspruch 11, **dadurch gekennzeichnet, dass** die Pleuelstangen (15.1, 15.2) in Umfangsrichtung versetzt zueinander an den Rotorenden angelenkt und jeweils unmittelbar mit den Kniehebelgestängen (9.1, 9.3 bzw. 9.2, 9.4) gelenkig verbunden sind (Fig. 4).

13. Formschließeinheit nach einem der vorhergehenden Ansprüche, **dadurch gekennzeichnet, dass**
der Rotationsmotor (7) mit der Rotordrehachse mittensymmetrisch und senkrecht zur Hubrichtung der beweglichen Formaufspannplatte (6) angeordnet und gehäuseseitig an der den Kniehebelmechanismus (8) endseitig abstützenden Basis (3) befestigt ist.

14. Formschließeinheit, insbesondere für eine Spritzgießmaschine, mit einer feststehenden und einer linear beweglichen Formaufspannplatte sowie mit einem von einem Rotationsmotor angetriebenen Kurbeltrieb für die Verfahrbewegung und die Verriegelung der beweglichen Formaufspannplatte in der Formschließlage, **dadurch gekennzeichnet, dass**
der Kurbeltrieb eine Pleuelstange umfasst, die innerhalb der Grenzen des Rotordurchmessers exzentrisch zur Rotordrehachse unmittelbar am Rotor angelenkt ist.

15. Formschließeinheit nach Anspruch 14, **dadurch gekennzeichnet, dass** der Rotationsmotor ein elektrischer Hohlwellenmotor mit einem am Hohlwellenende angeordneten Drehgelenk für die Pleuelstange ist.

16. Formschließeinheit nach Anspruch 14 oder 15, **dadurch gekennzeichnet, dass**
der Rotationsmotor zum Öffnen und Schließen der beweglichen Formaufspannplatte voll durchdrehbar ist.

17. Formschließeinheit nach einem der Ansprüche 14 bis 16, **dadurch gekennzeichnet, dass**
der Rotationsmotor mit der Rotordrehachse mittensymmetrisch und senkrecht zur Hubrichtung der beweglichen Formaufspannplatte angeordnet und gehäuseseitig an der den Schließmechanismus endseitig abstützenden Basis befestigt ist.
